# EUROPEAN PATENT SPECIFICATION

(11) **EP 0 992 467 B1**
(45) Date of publication and mention of the grant of the patent: **12.02.2003**
(21) Application number: 99118962.2
(22) Date of filing: 27.09.1999
(51) Int. Cl.: C04B 35/185, C04B 38/00

(54) **Production of porous mullite bodies**
Herstellung von porösen Mullitkörpern
Fabrication de pièces poreuses en mullite

(30) Priority: 01.10.1998 US 102620 P; 01.10.1998 US 102621 P
(43) Date of publication of application: 12.04.2000
(73) Proprietor: CORNING INCORPORATED, Corning, N.Y. 14831 (US)
(72) Inventor: Brundage, Robert Kevin, Corning, NY 14831 (US); Lynn, Merrill, Corning, NY 14831 (US); Hickman, David Lee, Corning, NY 14831 (US)
(74) Representative: Marchant, James Ian

(56) References cited:
- EP-A- 0 130 734
- EP-A- 0 425 833
- WO-A-98/25685

## Description

### BACKGROUND OF THE INVENTION

### 1. Field of the Invention

The present invention relates to porous mullite-based ceramic articles and a process for the manufacturing the same. The mullite-based ceramic articles are particularly suitable for use as porous filtration devices and/or supports. The mullite-based ceramic articles are additionally suitable for use as a porous filtration devices and/or supports for use in the chemical processing industry.

### 2. Discussion of the Related Art

In the field of membrane separations, thin porous membranes deposited on porous supports are widely used for microfiltration and ultrafiltration of liquid media and gas separation. The macroporous support functions to provide mechanical strength for the thin porous membrane. Porous support materials include alumina, cordierite, mullite, silica, spinel, zirconia, other refractory oxides and various oxide mixtures, carbon, sintered metals and silicon carbide.

Several considerations and limitations are important is selecting the appropriate material for the porous support. The porous support should preferably exhibit the following characteristics: (1) a total porosity, as measured by Hg intrusion of greater than 30%; (2) a high permeability; and, (3) pores exhibiting good connectivity, a greater than sub-micron average pore size and a narrow size distribution. The combined effect of these properties is that the porous support will exhibit both a good filtration efficiency and permeability such that the porous support will be suitable for most microfiltration and ultrafiltration applications. Lastly, for most applications the porous support should exhibit a sufficiently high mechanical strength (MOR) and reasonably high resistance to chemical attack; for chemical processing applications, however the porous support should exhibit very high resistance to chemical attack. It is this last characteristic, resistance to chemical attack, that makes mullite a preferred ceramic for these filtration and chemical processing applications.

It is known to those skilled in the art, that one conventional method for making sintered mullite structure involves firing, at about 1600°C, a mixed powder of alumina (Al2O3) and silica (SiO2), the constituent components of mullite; i.e. the reaction sintered formation of mullite bodies. Although mullite structures produced in this manner exhibit sufficient chemical resistance and mechanical strength, the mullite structures formed in this conventional manner are dense and exhibit pores of a submicron average pore size.

One reaction-sintered mullite processing innovation, enabling the formation of mullite structures exhibiting increased pore volume and pore sizes ranging from 3 to 2,000 nm (30 to 20,000Å), involved the utilization of a leaching process; U.S. Pat. Nos. 4,601,997, (Speronello) and 4,628,042 (Speronello). In the first reference, the process involves calcining kaolin clay through its exotherm without initiating the formation of substantial mullite. Thereafter, the resultant calcined clay is leached utilizing an alkaline aqueous solution so as to remove silica. Lastly, the leached kaolin clay is washed, dried and calcined at a temperature and for a time sufficient to form mullite. The second Speronello describes mixing hydrous clay, or hydrous clay and calcined clay, thermally convertible to mullite and free silica, with a fugitive binder and thereafter forming the mixture into self-supporting green bodies. The green bodies are then calcined for a time and a temperature sufficient to form mullite crystals and free silica and the calcined bodies are thereafter subject to leaching with an alkali solution to remove the free silica to create pores. As in the previous reference the mullite products produced were characterized by relatively high surface area; e.g., greater than about 15 m2/g, high pore volume, e.g., greater than about 0.22 cc/g, and a high concentration of pores in the range of 15 to 35 nm (150 to 350 Å) diameter.

While these Speronello references provided significant advances in the capability of the art to form porous, high strength mullite bodies, through the use of such leaching techniques, the added complexity of leaching in the processing is undesirable. Furthermore, the pore size exhibited by the mullite bodies produced by these techniques, 3 to 2,000 nm (30 to 20,000Å) is, with the majority from 10 to 60 nm (100 to 600 Å), is less than that desirable for the aforementioned filtration applications.

Mullite formation methods involving the use of pre-reacted mullite powder represent an improvement over the aforementioned reaction sintered methods. Two such reference which disclose the use of pre-reacted mullite powder include U.S. Pat No. 4,935,390 (Horiuchi et al.) and German Pat. No. 42 26 276 (Levkov).

The Horiuchi reference discloses a method for forming a sintered mullite-based body having improved flexural strength involving heat treating a composition of 80 to 99.1%, and 0.1 to 20%, by weight, of a mullite powder and a sintering aid, yttrium oxide, respectively. Although these bodies exhibit improved flexural strength, the use of this sintering aid results in mullite bodies which are too dense (bulk densities ≈ 3.0 g/cm3) to be suitable for the aforementioned filtration applications.

The Levkov reference discloses a method for the production of a ceramic sintered filter body characterized in that the starting mixture consists of 90-93% mullite, having grains of between 0.63 to 0.1mm, an opening material, either 4-8% cork scrap or 12-16% rubber scrap, having a grain size of up to a maximum of 0.2mm, and a binder comprising 5-7% clay and 1-3% Al₂O₃; all in weight percent. The filter body so-formed by this method consists predominately of mullite crystals and exhibits a porosity of 50-70% by volume with pore sizes ranging from less than 30µm to up to 200µm with a high portion of the average pores ranging in size from 40-100µm. Although the porosity and pore size is much larger than that possessed by reaction sintered mullite bodies, the porosity, the pore size and pore distribution combine to result in low mechanical strength, low filtration efficiency bodies, not suitable for use as porous supports for use in microfiltration and ultrafiltration applications, specifically those applications involving pressurized liquid.

Although both of these processes result in the production of mullite bodies exhibiting larger pore sizes and improved filtration when compared to reaction sintered mullite bodies, their chemical durability are not such that they would be suitable for use in those applications where the porous supports would be exposed to highly basic or highly acidic environments akin to those environments seen in the chemical processing industry.

There is, accordingly, a clear need for a means for producing a porous mullite structure exhibiting an increased average pore size, a narrow pore size distribution, and high permeability, i.e., mullite bodies possessing both high filtration efficiency and high permeability suitable for use in the microfiltration and ultrafiltration of liquid media and gas separation. Additionally, there is a clear need for a means for producing a porous mullite structure exhibiting an increased chemical durability and possessing both sufficient filtration efficiency and permeability suitable for use as porous supports in the chemical processing industry.

### SUMMARY OF THE INVENTION

The object of the present invention is to solve the above problems of the prior art and to provide a method for making a sintered ceramic substrate, having mullite as its primary phase, possessing good pore connectivity, increased average intrusion-pore size and a narrowed through- pore size distribution, without the loss of the inherent excellent properties thereof; e.g., mechanical strength, high permeability and total intrusion porosity. The combined effect of the narrowed through-pore size distribution, increased average intrusion-pore size and good pore connectivity is a resultant mullite body that exhibits high permeability and correspondingly, though unexpected, high filtration efficiency.

A second object of the present invention is to provide a method for making a sintered ceramic substrate, having mullite as its primary phase, having improved resistance to chemical attack and sufficient filtration efficiency and permeability.

It has been surprisingly found that when a water swelling clay is used, in combination with the use of pre-reacted mullite powder in the preparation of mullite structures, the resulting ceramic bodies exhibit the above mentioned properties. Specifically, according to one aspect the invention is directed at a composition for use in preparing a sintered substrate having mullite as its primary phase comprised of pre-reacted mullite powder, and a water-swelling clay.

According to one embodiment the composition consists of 75 to 99%, by weight, pre-reacted mullite powder, and 1 to 25%, by weight, of water-swelling clay.

According to another embodiment the composition comprises alumina and/or an alumina yielding precursor, preferably in an amount of 5 to 25% by weight.

This invention also relates to a method for producing a sintered ceramic substrate having mullite as its primary phase, comprising the following steps:
preparing a plasticizable inorganic raw material mixture having a chemical composition comprising, in percent by weight, 30 to 60% SiO₂, at least 30% Al₂O₃, and 1 to 10% MgO, the raw material mixture comprising pre-reacted mullite powder and a water-swelling clay;
adding an organic binder system to the inorganic mixture and kneading the mixture and thereafter extruding the mixture to form a green substrate;
firing the substrate for a time and at temperature sufficient to form a sintered mullite structure.

The invention also provides a porous sintered ceramic material having mullite as its primary phase and having a composition comprised, in weight percent, of 30 to 60% SiO₂, at least 30% Al₂O₃, and 1 to 10% MgO, the ceramic material a narrow through-pore size distribution comprised of pores exhibiting an average intrusion-pore size of from 2-15 µm, and a total intrusion porosity, as measured by Hg intrusion, of at least 30%.

Inclusion of an amount of alumina or an alumina-yielding precursor in the method results in the formation of a sintered mullite structure exhibiting an acid/base exposure strength loss of less than about 20%.

### BRIEF DESCRIPTION OF THE FIGURES

FIGS. 1 and 3 are SEM photographs taken at 500 X and 2500X, respectively, illustrating the crystal structure of the inventive mullite sintered body of Example 16;
FIGS. 2 and 4 are SEM photographs of the taken at 500X and 2500X, respectively, illustrating the crystal structure of the comparison mullite sintered body of Example 17.

### DETAILED DESCRIPTION OF THE INVENTION

A first aspect of the invention involves the use of a plasticizable mixture in preparing a ceramic substrate having mullite as its primary phase which comprises, as raw materials, pre-reacted mullite powder and a water-swelling clay. The relative amounts of these materials will depend on the desired fired composition, but will generally be utilized so that, by weight on an analytical oxide basis, the admixture comprises about 30 to 60% SiO₂, at least 30%, Al₂O₃, and 1 to 10% MgO.

A second aspect involves the inclusion of an amount of alumina and/or an alumina-yielding precursor as the source of the Al₂O₃ while utilizing the same relative amounts of the raw materials to thereby form the same analytical oxide basis composition.

An acceptable source of mullite powder for use a starting raw material may be powder obtained by mixing alumina and silicon oxide, calcining the mixture to form mullite and pulverizing the mullite. An example of an acceptable mullite powder is that manufactured by C-E Minerals (King of Prussia, PA) and marketed as Mulcoa®. Generally, the finer the average particle size of the mullite powder the stronger and more chemically durable the so-formed mullite substrate will be while still exhibiting the increased, coarse intrusion pore size and high overall intrusion porosity. Preferably, the mullite powder exhibits an average particle size of less than about 150µm, and more preferably less than about 50µm.

An acceptable water swelling clay for use in the present invention is a bentonite-type montmorillonite clay; e.g., Bentolite, manufactured and marketed by Southern Clay Products (Gonzales, TX).

Regarding the alumina and/or alumina-yielding precursor, alumina-yielding precursors such as boehmite or hydrated alumina are acceptable for use in the invention, however fine alumina, preferably α-alumina, is preferred because of its greater reactivity. One specific alumina acceptable for use in this invention includes A-16SG sold by Alcoa Industrial Chemicals, Pittsburgh, PA.

The aforementioned raw materials, with or without the alumina or alumina-yielding precursor, are combined in a mixing step sufficient to produce an intimate mixing of the raw material phases to allow complete reaction in thermal processing. A binder system is added at this point to help create an extrudable mixture that is formable and moldable. A preferred binder system for use in the present invention comprises a cellulose ether binder component selected from the group consisting of methylcellulose, methylcellulose derivatives, and combinations thereof, a surfactant component, preferably stearic acid or sodium stearate, and a solvent comprising water. Excellent results have been obtained utilizing a binder system which comprises the following amounts, assuming 100 parts by weight of the inorganic, clay and mullite powder, raw material mixture: about 0.2 to 2 parts by weight of the sodium stearate, about 2.5 to 6.0 parts by weight of a methylcellulose of a hydroxypropyl methylcellulose binder, and about 8 to 30 parts by weight of the water.

The individual components of the binder system are mixed with a mass of the inorganic powder material, e.g., the mullite powder and water-swelling clay mixture, in a suitable known manner, to prepare an intimate mixture of-the ceramic material and the binder system capable of being formed into a ceramic body by, for example, extrusion. For example, all components of the binder system may be previously mixed with each other, and the mixture is added to the ceramic powder material. In this case, the entire portion of the binder system may be added at one time, or divided portions of the binder system may be added one after another at suitable intervals. Alternatively, the components of binder system may be added to the ceramic material one after another, or each previously prepared mixture of two or more components of the binder system may be added to the ceramic powder material. Further, the binder system may be first mixed with a portion of the ceramic powder material. In this case, the remaining portion of the ceramic powder is subsequently added to the prepared mixture. In any case, the binder system must be uniformly mixed with the ceramic powder material in a predetermined portion. Uniform mixing of the binder system and the ceramic powder material may be accomplished in a known kneading process.

The resulting stiff, uniform and extrudable batch mixture is then shaped into a green body by any known conventional ceramic forming process, such as, e.g. extrusion, injection molding, slip casting, centrifugal casting, pressure casting, dry pressing, etc. For the preparation of a honeycomb substrate suitable for use as a porous support for use in microfiltration and ultrafiltration of liquid media and gas separation, or a honeycomb substrate suitable for use as a porous support for use in chemical processing applications, extrusion through a die, is preferable.

The prepared ceramic green body is then dried for a period of about 5-20 minutes prior to firing by any conventional method such as hot-air drying or dielectric drying, with dielectric being the preferred method. The dried green body is thereafter fired at a sufficient temperature and for a sufficient time to result in a fired ceramic body containing mullite as its primary phase. The firing conditions can vary depending on the process conditions such as specific composition and nature of the equipment. However, some preferred firing conditions are as follows:
heating the green body to a first temperature of about 600°C to about 650°C at a firing rate of about 5°C to about 25°C per hour, preferably about 18°C per hour and thereafter from the first temperature to a second temperature of between about 1400°C to about 1550°C at a firing rate of about 10°C to about 50°C per hour, and preferably about 25°C per hour, and holding at the third temperature for about 6 hours to about 16 hours, preferably about 10 hours, and thereafter cooling the green body to room temperature at a cooling rate of about 100°C to about 200°C per hour.

As previously mentioned, it has been found that by utilizing a combination of the water-swelling clay and the pre-reacted mullite powder as the main raw material components of the batch mixture, the mixture described herein is most suitable for preparing high strength, high durability high permeability, porous mullite substrates possessing large pores. Although this embodiment of invention is particularly advantageous for preparing porous substrates suitable for use as porous supports for use in microfiltration and ultrafiltration of liquid media and gas separation, the claimed mixtures can also be used for forming mullite structures for use in other applications including, for example, diesel particulate filters, molten metal filters and catalyst supports.

Inclusion of alumina or alumina-yielding precursor in combination with the previously mentioned water-swelling clay and pre-reacted mullite powder as the main raw material components of the batch mixture, results in a mixture that is most suitable for use in preparing porous mullite substrates exhibiting increased chemical durability and sufficient permeability and filtration efficiency. Although this embodiment is particularly advantageous for preparing porous substrates suitable for use as porous supports for use in chemical processing applications involving exposure to highly basic and/or acidic environments, the claimed mixtures can also be used for forming mullite structures for use in other applications. Those other applications include, for example, porous supports for microfiltration and ultrafiltration of liquid media and gas separation, as well as the aforementioned applications such as diesel particulate filters, molten metal filters and catalyst supports.

The sintered mullite bodies formed according to the first embodiment of the present invention are characterized by certain properties that are inherent to mullite, including a high chemical durability and permeability and a total porosity, as measured by Hg intrusion, of about 30%. The mullite bodies made according to the present invention are additionally characterized by increased sized pores exhibiting an average pore size, as measured by Hg intrusion,(i.e., intrusion-pores) of between about 2 to 15µm, as well as a narrow pore distribution, as measured by capillary flow analysis, (i.e., through-pore distribution) wherein substantially all of the through-pores exhibit a size of between 0.5 to 7.5 µm. It is this combination of coarse intrusion-pores and narrow through-pore size distribution that collectively contributes to produce a body that exhibits both a high filtration efficiency and permeability, filter properties not typically found in the same body.

Regarding the filtration efficiency of these inventive mullite bodies, the filtration efficiency is measured according to the National Sanitation Foundation NSF 53-1996 protocol utilizing fine Arizona road dust. Preferably, the mullite bodies described herein exhibit a filtration efficiency of greater than 99.95% at the 25% flow reduction point.

Referring now to the technique for characterizing porosity/pore size and pore distribution, Hg intrusion and capillary flow analysis, respectively, these techniques are complementary regarding the porosity analysis. Put differently, the combination of these two porosity techniques results in a more complete analysis of the ceramic body's porosity.

On the one hand, the capillary flow analysis technique is based upon the principle that capillary forces are inversely proportional to pore size and involves utilizing a liquid which wets a porous material and forcing that liquid into and through the material through the use of a pressurized gas. The lowest pressure at which flow begins is a function of the largest through-pore. The rate of flow of the gas through the body is monitored, and based on the plot of pressure versus flow, the through-porosity can be characterized as to size and quantity. On the other hand, the mercury intrusion technique, involves forcing mercury into a porous body which it does not wet, and from the plot of volume and pressure, inferring the pore size distribution. Besides the inference of the pore size distribution, another shortcoming of the mercury intrusion technique is that coarse pores which are accessible only through small pores will be inferred to have the smaller porosity. Assuming a flat sheet having large exterior pores which are connected by small necks or through-pores, it can be seen that the combination of techniques gives a more complete analysis of the porosity. Specifically, mercury intrusion reveals that flat body is a porous one with pores the size of these coarse pores, while capillary flow analysis reports the porosity of the same flat body in terms of the through-pores.

The inventive mullite bodies formed according to the second embodiment of the invention possess an increased chemical durability as indicated by an acid/base exposure strength loss of less than about 20%. The acid/base exposure strength loss is a measure that compares the initial cellular crush strength of honeycomb substrates with that of the same honeycomb substrate after exposure to a 2-day acid/base durability screening test. In other words, the initial cellular crush strength is compared to the exposed or resultant cellular crush strength to generate a percentage strength loss. Specifically, the 2-day acid/base test involves subjecting the honeycomb substrate to two exposure cycles as follows: (1) 24 hour exposure in 0.1 M HCl at a temperature 95° C and a pH of 1; and, (2) 24 hour exposure in 1.2M NaOH at a temperature of 95°C and a pH of 14.

In either of the first or second embodiments, the plasticizable mixture can additionally include materials suitable for use as pore-forming agents, including but not limited to, graphite, cherry pit flower, wood chips, saw dust and starch. The effect of adding these pore-forming agent is that the average size of the pores formed is greater than those sintered mullite bodies without the pore-forming agent; i.e. the average intrusion pore size being typically between about 10-15µm.

While not intending to be limited by theory the mechanism by which the water swelling clay of the first embodiment expands the structure and results in an increased mean pore size is thought be due to the cations holding the negatively charged clay layers together. Alkali and alkaline earth cations are adsorbed in the layers of montmorillonite, forming a bridge between the layers. The distance between the layers increases with the amount of water present and the size of the adsorbed cation increasing the effective volume occupied by the solid. In the case of sodium ions, the zeta potential in the internal surfaces is high and the electrostatic repulsion forces are significant and long range. Eventually a balance occurs between the attractive and repulsive forces. It is this swelling phenomenon which expands the green substrate thereby leaving large pores in the subsequently fired structure.

While not intending to limited by theory, the inclusion of the alumina in the raw material composition in the second embodiment contributes to the resultant formation of mullite bodies comprising much less free, intergranular silica (i.e., less free silica available for chemical attack), smaller, yet still coarse, pore sizes and finer mullite crystal agglomerates when compared to those mullite bodies formed without the inclusion of alumina and/or alumina-yielding precursors in the starting raw material. It is theorized that these changes are a result of the alumina reacting with available free silica within and around the mullite agglomerates resulting in the slightly smaller mullite agglomerates and the decrease in the average pore size exhibited by the mullite bodies. More specifically, the inventive mullite bodies exhibit bridges or connections between the mullite agglomerates that have greatly reduced amounts of free silica than the prior art mullite bodies, which, in turn improves the chemical durability as evidenced by a corresponding increase in the resistance to acid/base strength exposure strength loss. Furthermore, it is thought that failure in these inventive and prior art mullite bodies most likely initiates at the bridge between particles where the stress concentration is the greatest. As such, a reduction in the available free silica for attack in these areas directly results in a resistance to chemical attack thereby allowing for a much slower rate of strength degradation in acid/base environments. Although finer porosity generally indicates higher surface area for chemical attack and correspondingly a decrease in the chemical durability, it is theorized that the reduction in free silica has a much greater effect in increasing the chemical resistance than the finer porosity has on decreasing the resistance to chemical attack.

### EXAMPLES

To further illustrate the principles of the invention of the present invention, there will be described several examples of the mullite bodies formed according to the invention.

### EXAMPLES 1-15

Inorganic powder batch mixtures suitable for the formation of a ceramic body having mullite as its primary crystalline phase are listed in TABLE I; as listed in percent by weight. Each of compositions 1-15 were prepared by combining and dry mixing together the components of the designated inorganic mixture as listed in TABLE I. An amount of the organic binder system listed in TABLE I was then added to each of the inorganic dry mixtures and thereafter further mixed to form a plasticized ceramic batch mixture. Each of these 15 different plasticized ceramic batch mixtures comprised differing amounts of the binder system components, as detailed in TABLE I; ranging from 24.75 to 35 parts by weight, based on 100 parts total inorganics.

Each of the various plasticized mixtures were extruded through an extruder under conditions suitable to form 100 cell/2.54 cm (100 cell/in) ceramic honeycomb substrate logs exhibiting a diameter of 2.54 to 3.175 cm (1 to 1¼ in), a cell wall size of 609.6 µm (24 mils) and a length of from about 2.54 to 5.08 cm (1 to 2 in). The ceramic honeycomb green logs formed from each of the 15 batch compositions were dried for approximately 10 minutes, cut into 7.62 cm (3 in) substrates and thereafter subjected to a heating and firing cycle sufficient to remove the organic binder system from, and to sinter, the honeycomb substrates. Specifically, the green substrates were fired were fired to between 1400 and 1550°C and held for a period of about 10 hours; i.e., firing conditions suitable for forming ceramic bodies having mullite as their primary phase.

The bulk density, mean intrusion pore size and through-pore distribution, total intrusion porosity and the mechanical strength of the mullite honeycomb substrates were measured. The bulk density was measured utilizing the ASTM "water boil" test and is reported in g/cc. The intrusion porosity data was generated utilizing a conventional mercury intrusion porosimetry technique using a mercury porosimeter manufactured by the Micromeritics Corp, specifically the Autopore II 9220 V3.04. The through-pore distribution data was generated using the aforementioned capillary flow analysis. The filtration efficiency data was generated utilizing the aforementioned National Sanitation Foundation test. Permeability data is 406.4 µm (16 mil) data using conventional methods of testing permeability and is reported in ml per minute per cm² per 2.54 cm water column (ml per minute per inch squared per inch water column). The mechanical strength, modulus of rupture (MOR) or flexure strength, was measured on 0.794 cm (5/16 in) rods, produced in the same manner as the honeycomb substrates, and is reported in kPa and psi units.

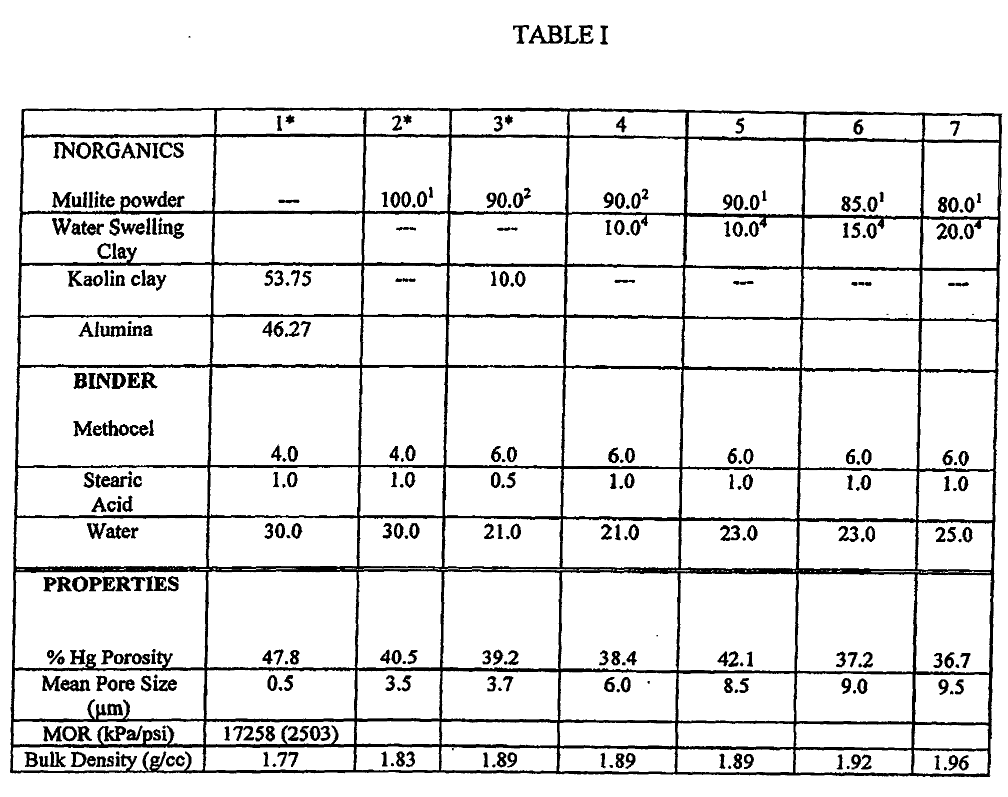

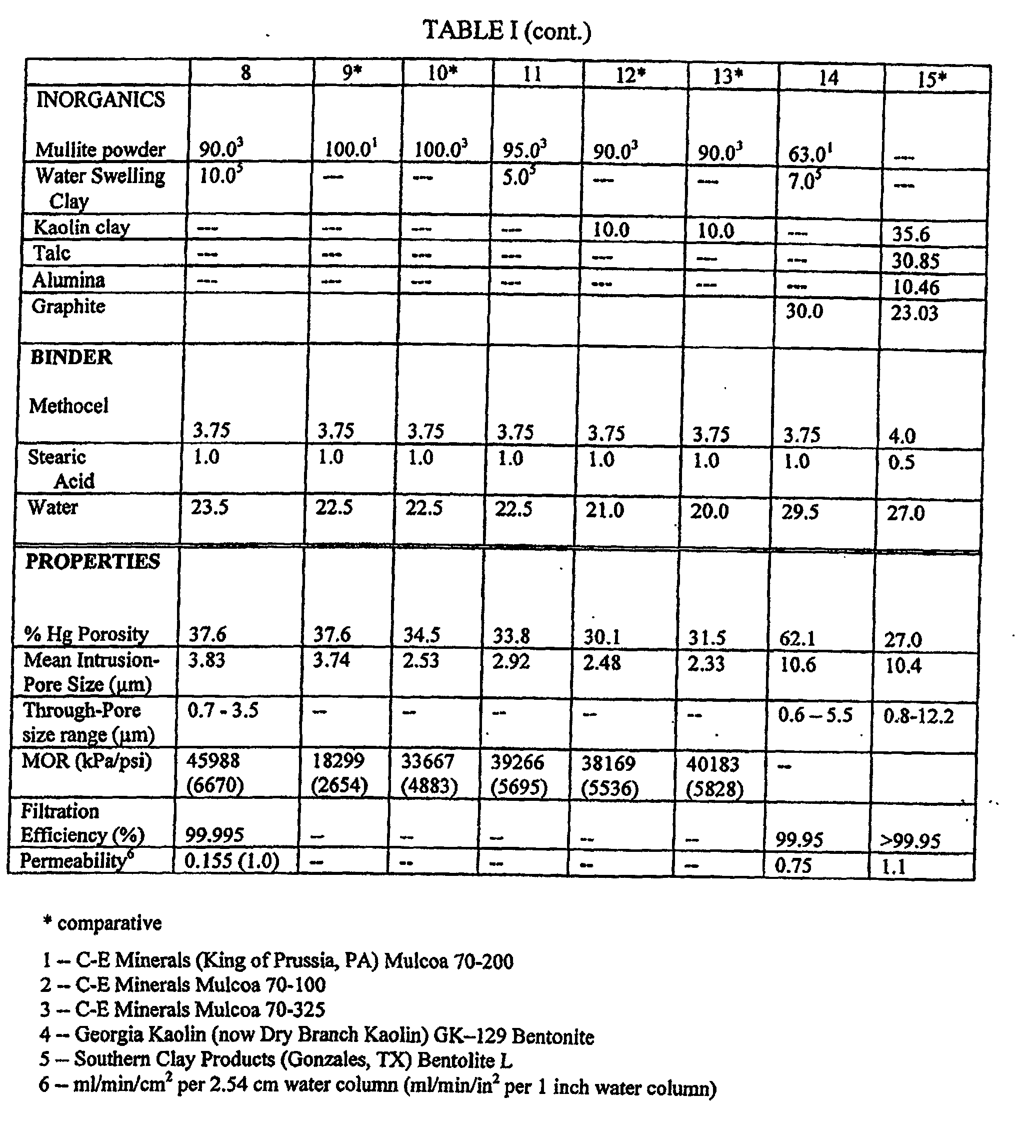

As these examples show, incorporation of the water swelling clay, such as the two bentonite-type clays used, in amounts of up to about 20% in combination with the use of pre-reacted mullite into the batch mixture results in sintered mullite-based ceramic substrates which exhibit a total porosity of nearly 40%, an increased average intrusion pore size of between 3-10µm, when compared to the prior art reaction sintered mullite bodies (Example 1). Furthermore, Examples 8 and 13, inventive mullite bodies exhibiting representative properties which can be predictably obtained in the instant invention, each exhibited a high filtration efficiency (>99.95%) and a correspondingly high 406.4 µm (16-mil) permeability (>0.75), as a result of the narrow through-pore size distribution each possessed, 0.7 to 3.5 and 0.6 to 5.5 µm, respectively. For comparison purposes, a standard cordierite body, Example 15, was measured for through-pore distribution, filtration efficiency and permeability. Although the 406.4 µm (16-mil) permeability of this comparison sample was higher than the inventive mullite samples (1.1) it exhibited a filtration efficiency of less than 99.95%, due, in part, to the wide through-pore distribution it exhibited, 0.8 to 12.2.

The increased average intrusion pore size and narrowness of the through-pore size distribution and resultant filtration efficiency of these inventive mullite bodies without the loss of the inherent excellent properties thereof; e.g., sufficient mechanical strength (MOR), permeability and total intrusion porosity makes these inventive mullite substrates suitable for use as filter and/or filter supports in the microfiltration and ultrafiltration of liquid media and gas separation.

### EXAMPLES 16-20

Inorganic powder batch mixtures suitable for the formation of a ceramic body having mullite as its primary crystalline phase are listed in TABLE II; as listed in percent by weight. Each of the mullite compositions 16-19, compositions 17-19 being comparative mullite compositions, were prepared by combining and dry mixing together the components of the designated inorganic mixture as listed in TABLE II. An amount of the organic binder system listed in TABLE II was then added to each of the inorganic dry mixtures and thereafter further mixed to form a plasticized ceramic batch mixture. Each of these 4 different plasticized ceramic batch mixtures comprised differing amounts of the binder system components, as detailed in TABLE II; ranging from 25.75 to 28.25 parts by weight, based on 100 parts total inorganics.

Each of the various plasticized mixtures were extruded through an extruder under conditions suitable to form 100 cell/2.54 cm (100 cell/in) ceramic honeycomb substrate logs exhibiting a diameter of 2.54 to 3.175 cm (1 to 1¼ in), a cell wall size of 609.6 µm (24 mils) and a length of from 2.54 to 5.08 cm (1 to 2 in). The ceramic honeycomb green logs formed from each of the 4 batch compositions were dried for approximately 10 minutes, cut into 7.62 cm (3 in) substrates and thereafter subjected to a heating and firing cycle sufficient to remove the organic binder system from, and to sinter, the honeycomb substrates. Specifically, the green substrates were fired under conditions in accordance with the aforementioned firing schedule. Generally, the bodies were fired to between 1400 and 1550°C and held for a period of about 10 hours; i.e., firing conditions suitable for forming ceramic bodies having mullite as their primary phase.

Regarding composition 20, a comparative cordierite composition, it was prepared in generally the same manner as the 4 mullite compositions, including the firing of the cordierite composition.

The filtration efficiency, permeability, mechanical strength and mean intrusion pore size of the inventive mullite and the comparative mullite and cordierite honeycomb substrates were measured. The intrusion porosity data was generated utilizing a conventional mercury intrusion porosimetry technique using a mercury porosimeter manufactured by the Micromeritics Corp, specifically the Autopore II 9220 V3.04. The filtration efficiency data was generated utilizing the aforementioned National Sanitation Foundation test. Permeability data is 406.4 µm (16 mil) data using conventional methods of testing permeability and is reported in ml per minute per cm2 per 2.54 cm water column (ml per minute per inch squared per inch water column). The mechanical strength, modulus of rupture (MOR) or flexure strength, was measured on 0.794 cm (5/16 in) rods, produced in the same manner as the honeycomb substrates, and is reported in kPa and psi units.

The chemical durability of the inventive and comparative composition honeycomb substrates was measured in the manner as described above. In short, the initial cellular crush strength of each of the honeycomb substrates was measured and then the substrate was subjected to a 2-day acid/base durability screening test after which the resultant or exposed cellular crush strength was measured. The initial cellular crush strength was thereafter compared to the exposed cellular crush strength to generate an acid/base exposure strength loss. These numbers are recorded in Table II as Cellular Crush Strength, Initial and Exposed, and Strength Loss.

**TABLE II**

| | | 16 | 17 | 18 | 19 | 20 |
|---|---|---|---|---|---|---|
| **INORGANICS** | | | | | | |
| Mullite powder | | 76.79² | 90.0² | 100.0¹ | 90.0² | --- |
| Water Swelling Clay | | 8.533 | 10.0³ | --- | --- | --- |
| Talc | | --- | --- | --- | --- | 39.95 |
| Kaolin clay | | --- | --- | --- | 10.0 | 16.61 |
| Silica | | --- | --- | --- | --- | 12.56 |
| Alumina | | 14.79⁴ | --- | --- | --- | 30.89 |

| **BINDER** | | | | | | |
|---|---|---|---|---|---|---|
| Methocel | | 3.75 | 3.75 | 3.75 | 3.75 | 3.0 |
| Stearic Acid | | 1.0 | 1.0 | 1.0 | 1.0 | 1.0 |
| Water | | 23.0 | 23.5 | 22.5 | 21.0 | 25.0 |

| **PROPERTIES** | | | | | | |
|---|---|---|---|---|---|---|
| Filtration Efficiency (%) | | -- | 99.995 | -- | -- | -- |
| Permeability | | -- | 1.0 | -- | -- | -- |
| Mean Intrusion Pore Size (µm) | | 2.44 | 3.83 | 3.74 | 2.48 | 10.96 |
| MOR (kPa/psi) | | 72471 (10511) | 45988 (6670) | 18299 (2654) | 38169 (5536) | 14534 (2108) |
| Cellular Crush KPa (psi) | Initial | 76566 (11105) | 77145 (11189) | 26497 (3843) | 75946 (11015) | 33212 (4817) |
| | Exposed | 70988 (10296) | 48932 (7097) | 17175 (2491) | 53441 (7751) | 6826 (990) |
| Strength Loss (%) | | 7.3 | 36.6 | 35.2 | 29.6 | 79.4 |

| | | | | | | |
|---|---|---|---|---|---|---|
| 1 -- C-E Minerals (King of Prussia, PA) Mulcoa 70-200 | | | | | | |
| 2 -- C-E Minerals Mulcoa 70-325 | | | | | | |
| 3 -- Southern Clay Products (Gonzales, TX) Bentolite L | | | | | | |
| 4 - Alcan C-701 Alumina (Cleveland, OH) | | | | | | |

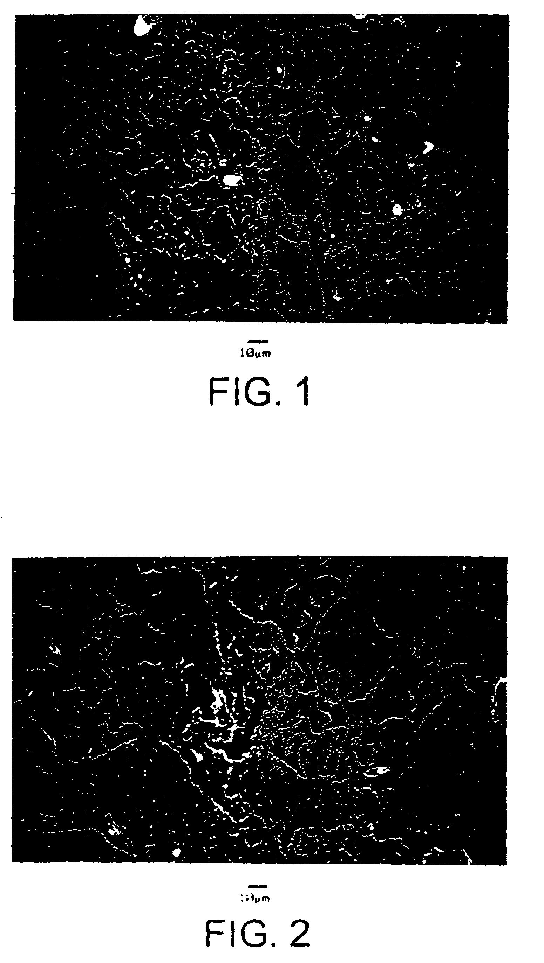

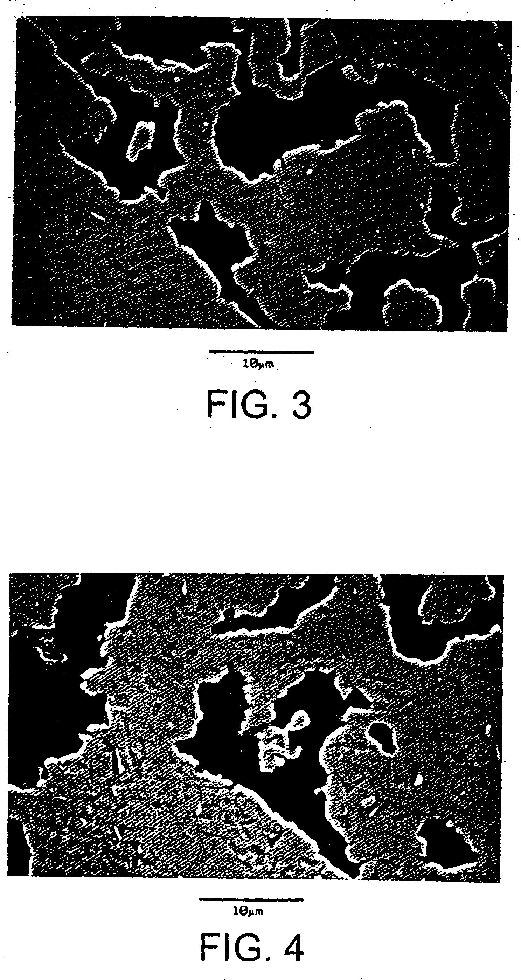

A comparison of FIGS. 1 and 2, SEMs of Example 16 and 17, respectively, taken at 500X, reveals that the substrate/composition detailed in FIG. 1, formed according to the invention detailed herein, exhibits both slightly smaller, though still coarse, pores (the dark areas) and finer mullite crystal agglomerates (gray areas) when compared to the comparison composition of FIG. 2. Comparing FIGS. 3 and 4, SEMs of Examples 16 and 17, respectively, taken at 2500X, reveals that the inventive composition detailed in FIG. 3 contains less intergranular silica (the slightly darker areas that are within the gray mullite agglomerates) when compared to the substrate/composition of FIG. 4. In spite of the reduction in mullite agglomeration size and average pore size which is shown by the comparison of FIGS. 1 and 2, which would be expected to decrease the chemical resistance of the mullite bodies, the inventive mullite bodies have an increased chemical resistance as reported in Table II. Specifically, the acid/base exposure strength loss exhibited by Example 16, 7.6%, is substantially less then that exhibited by the comparison Example 17, 36.6%; i.e., Example 16 exhibited a substantially greater resistance to chemical attack. It should also be noted that the acid/base exposure strength loss of Example 16 is far less than the other examples detailed in TABLE II as well; 7.6% vs. values ranging from 29.6% to as high as 79.4% (Example 20 being a standard cordierite body). As described above, it is thought that the reduction in the amount of intergranular silica, as revealed by the comparison of FIGS. 3 and 4, is the phenomenon responsible for increased resistance to chemical attack, as evidenced by the decreased acid/base exposure strength loss.

As these examples show, incorporation of the submicron alumina, in amounts of up to about 25% in combination with the use of pre-reacted mullite and water swelling clay into the batch mixture results in sintered mullite-based ceramic substrates having an increased chemical durability. The increased chemical durability of these mullite bodies without the loss of the those inherent excellent properties thereof; e.g., permeability and filtration efficiency renders these inventive mullite substrates capable for use as filters and or porous supports in highly basic or acidic environments as is found in the chemical processing industry.

## Claims

1. A composition for use in preparing a sintered substrate having mullite as its primary phase comprised of pre-reacted mullite powder and a water-swelling clay.

2. A composition according to claim 1 further comprising alumina and/or an alumina-yielding precursor.

3. A composition according to claim 1, consisting of, by weight, of 75-99% of the mullite powder and 1 to 25% of the water-swelling clay.

4. A composition according to claim 2, comprising 5-25% of alumina and/or an alumina yielding precursor.

5. A composition according to any of claims 1 to 4 wherein the water-swelling clay is a montmorillonite bentonite-type clay.

6. A composition according to any of claims 1 to 5 wherein the mullite powder exhibits an average particle size no greater than 150µm.

7. A composition according to claim 6 wherein the mullite powder exhibits an average particle size no greater than 50µm.

8. A method for producing a sintered ceramic substrate having mullite as its primary phase, comprising the following steps:
preparing a plasticizable inorganic raw material mixture having a chemical composition comprising, in percent by weight, 30 to 60% SiO₂, at least 30% Al₂O₃, and 1 to 10% MgO, the raw material mixture comprising pre-reacted mullite powder and a water-swelling clay;
adding an organic binder system to the inorganic mixture and kneading the mixture and thereafter extruding the mixture to form a green substrate;
firing the substrate for a time and at temperature sufficient to form a sintered mullite structure.

9. The method according to claim 8 wherein the raw material mixture further comprises an amount of alumina and/or alumina-yielding precursor and the mixture is fired to form the substrate for a time and at temperature sufficient to form a sintered mullite structure having an acid/base exposure strength loss of less than 20%.

10. The method according to claim 8 wherein the composition consists, by weight, of 75-99% of the mullite powder and 1 to 25% of the water-swelling clay.

11. The method according to claim 9 wherein the mixture comprises 5 to 25% of alumina and/or alumina-yielding precursor.

12. The method according to any of claims 8 to 12 wherein the water-swelling clay is montmorillonite bentonite-type clay.

13. The method according to any of claims 8 to 12 wherein the mullite powder exhibits an average particle size no greater than 150µm.

14. The method according to claim 13 wherein the mullite powder exhibits an average particle size no greater than 50µm.

15. A porous sintered ceramic material having mullite as its primary phase and having a composition comprised, in weight percent, of 30 to 60% SiO₂, at least 30% Al₂O₃, and 1 to 10% MgO, the ceramic material having a narrow through-pore size distribution, comprised of pores exhibiting an average intrusion-pore size from 2-15µm, and a total intrusion porosity of at least 30%.

16. The porous sintered ceramic material of claim 15 wherein the ceramic material exhibits an acid/base exposure strength loss of less than 20%.

17. The porous sintered ceramic material of claim 15 wherein the ceramic material exhibits acid/base exposure strength loss of less than 10%.

18. The porous sintered ceramic material of any of claims 15 to 17 wherein the through-pore size distribution is such that substantially all of the through-pores exhibit a size from 0.5 to 7.5µm.

19. The porous sintered ceramic material of any of claims 15 to 18 wherein the average intrusion pore size is from 2 to 10µm and the MOR is greater than 34474 kPa (5000 psi).

## Patentansprüche

1. Zusammensetzung zur Verwendung zur Herstellung eines gesinterten Substrats mit Mullit als dessen primärer Phase, umfassend vorumgesetztes Mullit-Pulver und einen Wasser-quellenden Ton.

2. Zusammensetzung nach Anspruch 1, weiterhin umfassend Aluminiumoxid und/oder einen Aluminiumoxid ergebenden Vorläufer.

3. Zusammensetzung nach Anspruch 1, bestehend aus, in Gewichtsprozent, 75-99 % des Mullit-Pulvers und 1 bis 25 % des Wasser-quellenden Tons.

4. Zusammensetzung nach Anspruch 2, umfassend 5-25 % Aluminiumoxid und/oder einen Aluminiumoxid ergebenden Vorläufer.

5. Zusammensetzung nach einem der Ansprüche 1 bis 4, wobei der Wasser-quellende Ton ein Ton des Montmorillonit-Bentonit-Typs ist.

6. Zusammensetzung nach einem der Ansprüche 1 bis 5, wobei das Mullit-Pulver eine mittlere Teilchengröße von nicht größer als 150 µm aufweist.

7. Zusammensetzung nach Anspruch 6, wobei das Mullit-Pulver eine mittlere Teilchengröße von nicht größer als 50 µm aufweist.

8. Verfahren zur Herstellung eines gesinterten Keramiksubstrats mit Mullit als dessen primärer Phase, mit den nachfolgenden Schritten:
Zubereiten eines weichmachbaren anorganischen Rohmaterial-Gemischs mit einer chemischen Zusammensetzung, umfassend in Gewichtsprozent, 30 bis 60 % SiO₂, mindestens 30 % Al₂O₃ und 1 bis 10 % MgO, wobei das Rohmaterial-Gemisch vorumgesetztes Mullit-Pulver und einen Wasser-quellenden Ton umfaßt;
Zugabe eines organischen Binder-Systems zu dem anorganischen Gemisch und Kneten bzw. Formen des Gemischs und anschließend Extrudieren des Gemischs, um ein grünes Substrat zu bilden;
Brennen des Substrats für eine ausreichende Zeit und Temperatur, um eine gesinterte Mullit-Struktur zu bilden.

9. Verfahren nach Anspruch 8, wobei das Rohmaterial-Gemisch weiterhin einen Anteil Aluminiumoxid oder eines Aluminiumoxid ergebenden Vorläufers enthält, und das Gemisch zur Bildung des Substrats für eine ausreichende Zeit und Temperatur gebrannt wird, um eine gesinterte Mullit-Struktur zu bilden, welche einen Festigkeitsverlust bei Säure/Base-Behandlung von weniger als 20 % aufweist.

10. Verfahren nach Anspruch 8, wobei die Zusammensetzung in Gewichtsprozent aus 75-99 % des Mullit-Pulvers und 1 bis 25 % des Wasser-quellenden Tons besteht.

11. Verfahren nach Anspruch 9, wobei das Gemisch 5 bis 25 % Aluminiumoxid und/oder einen Aluminiumoxid ergebenden Verläufer enthält.

12. Verfahren nach einem der Ansprüche 8 bis 12, wobei der Wasser-quellende Ton ein Ton vom Montmorillonit-Bentonit-Typ ist.

13. Verfahren nach einem der Ansprüche 8 bis 12, wobei das Mullit-Pulver eine mittlere Teilchengröße von nicht größer als 150 µm aufweist.

14. Verfahren nach Anspruch 13, wobei das Mullit-Pulver eine mittlere Teilchengröße von nicht größer als 50 µm aufweist.

15. Poröses Sinterkeramikmaterial mit Mullit als dessen primärer Phase und mit einer Zusammensetzung, umfassend, in Gewichtsprozent, 30 bis 60 % SiO₂, mindestens 30 % Al₂O₃, und 1 bis 10 % MgO, wobei das Keramikmaterial eine enge Durchgangsporen-Größenverteilung aufweist, umfassend Poren mit einer mittleren Eindringporengröße von 2-15 µm und eine Gesamt-Eindringporosität von mindestens 30 %.

16. Poröses Sinterkeramikmaterial nach Anspruch 15, wobei das keramische Material einen Festigkeitsverlust bei Säure/Base-Behandlung von weniger als 20 % aufweist.

17. Poröses Sinterkeramikmaterial nach Anspruch 15, wobei das keramische Material einen Festigkeitsverlust bei Säure/Base-Behandlung von weniger als 10 % aufweist.

18. Poröses Sinterkeramikmaterial nach einem der Ansprüche 15 bis 17, wobei die Durchgangsporen-Größenverteilung so ist, dass im wesentlichen alle Durchgangsporen eine Größe von 0,5 bis 7,5 µm aufweisen.

19. Poröses Sinterkeramikmaterial nach einem der Ansprüche 15 bis 18, wobei die mittlere Eindringporengröße von 2 bis 10 µm beträgt und der MOR (Bruchmodul) größer als 34474 kPa (5000 psi) ist.

## Revendications

1. Une composition à utiliser pour la préparation d'un substrat fritté contenant de la mullite comme phase primaire, constituée de poudre de mullite ayant préalablement réagi et d'une argile gonflant dans l'eau.

2. Une composition selon la revendication 1, comprenant de plus de l'alumine et/ou un précurseur d'alumine.

3. Une composition selon la revendication 1, constituée, en poids, de 75 à 99 % de la poudre de mullite et 1 à 25 % de l'argile gonflant dans l'eau.

4. Une composition selon la revendication 2, comprenant 5 à 25 % d'alumine et/ou d'un précurseur d'alumine.

5. Une composition selon l'une quelconque des revendications 1 à 4, dans laquelle l'argile gonflant dans l'eau est une argile montmorillonite du type bentonite.

6. Une composition selon l'une quelconque des revendications 1 à 5, dans laquelle la taille moyenne des particules de la poudre de mullite n'est pas supérieure à 150 µm.

7. Une composition selon la revendication 6, dans laquelle la taille moyenne des particules de la poudre de mullite n'est pas supérieure à 50 µm.

8. Un procédé de production d'un substrat céramique fritté contenant de la mullite comme phase primaire, comprenant les étapes suivantes :
préparer un mélange plastifiable de matières premières minérales ayant une composition chimique, en pourcentages en poids, de 30 à 60 % de SiO₂, au moins 30 % de Al₂O₃ et 1 à 10 % de MgO, le mélange de matières premières comprenant de la poudre de mullite ayant préalablement réagi et une argile gonflant dans l'eau ;
ajouter un système liant organique au mélange minéral et malaxer le mélange, puis extruder le mélange pour former un substrat non cuit ;
chauffer le substrat pendant un temps et à une température suffisants pour former une structure de mullite frittée.

9. Le procédé selon la revendication 8, dans lequel le mélange de matières premières comprend de plus une certaine quantité d'alumine et/ou de précurseur d'alumine et le mélange est chauffé pour former le substrat pendant un temps et à une température suffisants pour former une structure de mullite frittée ayant une perte de résistance mécanique par exposition à des conditions acides/basiques inférieure à 20 %.

10. Le procédé selon la revendication 8, dans lequel la composition est constituée, en poids, de 75 à 99 % de la poudre de mullite et 1 à 25 % de l'argile gonflant dans l'eau.

11. Le procédé selon la revendication 9, dans lequel le mélange comprend 5 à 25 % d'alumine et/ou d'un précurseur d'alumine.

12. Le procédé selon l'une quelconque des revendications 8 à 12, dans lequel l'argile gonflant dans l'eau est une argile montmorillonite du type bentonite.

13. Le procédé selon l'une quelconque des revendications 8 à 12, dans lequel la taille moyenne des particules de la poudre de mullite n'est pas supérieure à 150 µm.

14. Le procédé selon la revendication 13, dans lequel la taille moyenne des particules de la poudre de mullite n'est pas supérieure à 50 µm.

15. Un matériau céramique poreux fritté contenant de la mullite comme phase primaire et ayant une composition constituée, en pourcentage en poids, de 30 à 60 % de SiO₂, au moins 30 % de Al₂O₃ et 1 à 10 % de MgO, le matériau céramique ayant une étroite distribution de taille des pores traversants, consistant en pores présentant une taille moyenne de pores d'intrusion de 2 à 15 µm, et une porosité d'intrusion totale d'au moins 30 %.

16. Le matériau céramique poreux fritté de la revendication 15, dans lequel le matériau céramique présente une perte de résistance mécanique par exposition à des conditions acides/basiques inférieure à 20 %.

17. Le matériau céramique poreux fritté de la revendication 15, dans lequel le matériau céramique présente une perte de résistance mécanique par exposition à des conditions acides/basiques inférieure à 10 %.

18. Le matériau céramique poreux fritté de l'une quelconque des revendications 15 à 17, dans lequel la distribution de taille des pores est telle que sensiblement tous les pores traversants présentent une taille de 0,5 à 7,5 µm.

19. Le matériau céramique poreux fritté de l'une quelconque des revendications 15 à 18, dans lequel la taille moyenne des pores d'intrusion est de 2 à 10 µm et le module de rupture est supérieur à 34 474 kPa (5000 psi).
